# EUROPÄISCHE PATENTANMELDUNG

(11) **EP 0 564 003 A1**
(43) Veröffentlichungstag der Anmeldung: **06.10.1993**
(21) Anmeldenummer: 93107798.6
(22) Anmeldetag: 07.05.1988
(51) Int. Cl.: F16H 47/04

(54) **Stufenlos wirkendes hydrostatisch-mechanisches Lastschaltgetriebe**

(30) Priorität: 30.11.1987 DE 3740501; 26.01.1988 DE 3802118; 12.05.1987 DE 3715730
(62) Teilanmeldung aus: 88107357.1
(71) Anmelder: Jarchow, Friedrich, Prof. Dr.-Ing., D-45133 Essen (DE)
(72) Erfinder: Jarchow, Friedrich, Prof.Dr.-Ing, D-4300 Essen 1 (DE); Tenberge, Peter, Dr.-Ing., D-7990 Friedrichshafen (DE)
(74) Vertreter: Thiel, Christian, Dr. Dipl.-Chem.

(57) **Zusammenfassung**

Das Getriebe besteht aus einem fünfwelligen Zahnräder-Planetengetriebe, einem stufenlos einstellbaren hydrostatischen Getriebe, aus Zahnräder-Nachschaltstufen und aus Schaltkupplungen. Zu dem hydrostatischen Getriebe gehört eine Verdrängermaschine (a) mit verstellbarem Verdrängungsvolumen und eine (b) mit konstantem Verdrängungsvolumen. Von dem Planetengetriebe bildet eine Welle die Antriebswelle (1), an die die verstellbare Verdrängermaschine (a) angeschlossen ist. Eine zweite Welle (B) des Planetengetriebes steht mit der volumenkonstanten Verdrängermaschine (b) in Verbindung. Eine dritte Welle (C) dient als Anfahrwelle. Eine vierte und fünfte Welle des Planetengetriebe (A,E) stellen Koppelwellen dar. Sie verhalten sich so, daß sie in einer Extremstellung des hydrostatischen Getriebes gleiche Drehzahlen aufweisen und daß sie beim Verstellen des hydrostatischen Getriebes in die andere Extremlage ihre Drehzahlen so ändern, daß eine Koppelwelle stetig schneller und die andere stetig langsamer wird, wobei diese Koppelwellen wechselweise jeweils mindestens über zwei Nachschaltstufen, auch Gänge genannt, auf die Abtriebswelle (2) wirken. In den Extremlagen des hydrostatischen Getriebes besorgen Schaltkupplungen (Z) die Gangwechsel bei synchronen Drehzahlen, lastfrei und ohne Zugkraftunterbrechung. Die Steuerung und Regelung des auotmatischen Getriebes erfolgt mit elektronischen und hydraulischen Mitteln

## Beschreibung

Stufenlos wirkende hydrostatisch-mechanische Lastschaltgetriebe der im Oberbegriff der Patentansprüche angegebenen Art eignen sich vorteilhaft für Kraftfahrzeuge, da sie sich in weiten Bereichen stufenlos verstellen lassen und außerdem gute Wirkungsgrade haben. Der relativ große Stellbereich erlaubt den Betrieb der Brennkraftmaschine auf Vorzugskennlinien. Solche Kennlinien können z. B. die Kurve für minimalen Kraftstoffverbrauch oder eine Linie für ein gutes Beschleunigungsverhalten sein.

Die vorliegende Erfindung stellt eine Weiterentwicklung der Getriebe nach den Patentschriften US 3 580 107, US 3 709 060, US 3 888 139 und DE 31 47 447 C2 dar.

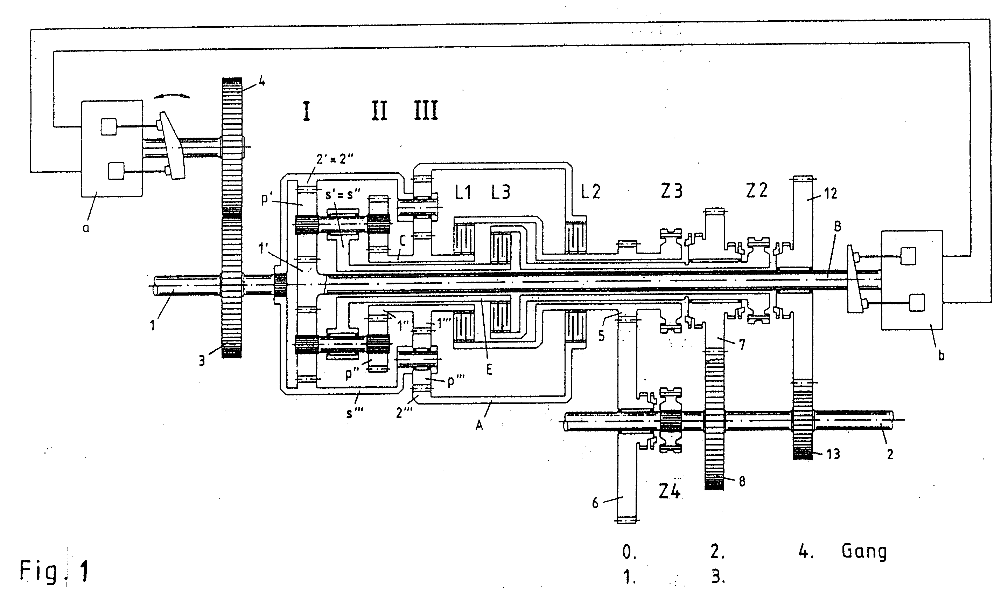

Aus den Fig. 1, 17, 18 und 20 der US PS 3 580 107 geht hervor, daß der maximale hydrostatische Leistungfluß bei halber maximaler Drehzahl der Verdrängermaschinen, bei halbem maximalen Verdrängungsvolumen und bei 0,8-fachem hydrostatischen Druck auftritt. Somit beträgt die aus diesen Werten sich ergebende hydrostatische Eckleistung das fünffache der wirksamen maximalen hydrostatischen Leistung, wodurch relativ groß bauende Verdrängermaschinen notwendig werden. Konzeptbedingt hat jede Nachschaltstufe eine andere Übersetzung.

Das stufenlos wirkende hydrostatischmechanische Lastschaltgetriebe nach der US PS 3 709 060 fährt rein hydrostatisch an. Außer diesem Anfahrgang verfügt es nur noch über Zwei weitere Gänge. Dadurch bauen die Verdrängermaschinen relativ groß. Konzeptbedingt haben die beiden Nachschaltstufen unterschiedliche Übersetzungen.

Das Getriebe nach der US PS 3 888 139 realisiert vier Gänge mit Zwei Planetenstufen als Nachschaltstufen. Auch hier geschieht das Anfahren rein hydrostatisch. Dabei kreist im Getriebe eine Blindleistung, die sich auf 50 % der durchgesetzten Leistung beläuft. Insgesamt erfordert das Konzept eine relativ hohe Anzahl von Rädern und Schaltkupplungen, was großen Aufwand bedeutet.

Die DE PS 31 47 447 C2 beschreibt ein Getriebe, bei dem das Anfahren mit einer konventionellen Reibungskupplung erfolgt. Daher kommt man mit relativ kleinen Verdrängermaschinen aus. Die als Stirnradstufen ausgebildeten Nachschaltstufen haben jeweils für zwei benachbarte Gänge die gleiche Übersetzung. Für die Gangwechsel sind Zahnkupplungen vorgesehen.

Das Getriebe nach der Patentschrift DE PS 3 147 447 C2 kommt der vorliegenden Erfindung am nächsten. Der Weiterentwicklung dieses Getriebes liegen nun folgende Aufgaben zugrunde:
- Kürzere Baulänge, um auch einen Einbau in Fahrzeugen mit querliegendem Motor zu ermöglichen
- Reduzierung des Bauaufwandes
Die Umsetzung des Anspruches bringt eine Erhöhung des Anfahrdrehmomentes bei gleichem installierten hydrostatischen Getriebe. Hier geschieht das Anfahren wie der andere Betrieb auch hydrostatischmechanisch, und zwar mit relativ geringen Verlustleistungen stufenlos vorwärts wie rückwärts.

In Fig. 1 hat das mehrwellige Planetengetriebe 5 Wellen. Sie entstehen durch den Zusammenschluß der Planetenstufe I, II und III mit den Sonnenrädern 1', 1'', 1''', den Hohlrädern 2' = 2'', 2''' und den Stegen s' = s'', s''', in denen die Planetenräder p', p'', p''' lagern. p' und P'' sind miteinander verbunden. 2' = 2'' kämmt mit p'. Es bilden die Glieder 2' = 2'' und s''' die Antriebswelle 1, 1' die Welle B für den Anschluß der Verdrängermaschine b, 2''' die schnellaufende Koppelwelle A, s' = s'' die langsamlaufende Koppelwelle E und schließlich 1'' = 1''' die Welle C. Es sind für die Welle C die Lamellenkupplung L1, für die Koppelwelle A die Lamellenkupplung L2 und für die Koppelwelle E die Lamellenkupplung L3 vorgesehen. Ein entsprechendes Umschalten zwischen diesen Kupplungen bewirkt ruckfreien Gangwechsel. Die Doppelschalt-Zahnkupplung Z2 sowie die Schalt-Zahnkupplungen Z3 und Z4 führen vorbereitende Schaltungen zum Gangwechsel durch. Sie sind mit Synchronisierungselementen versehen. Es gehören die Räder 5; 6 und die Zahnkupplung Z4 zum 0. und 1. Gang, die Räder 7; 8 mit der Zahnkupplung Z2 zum 2. Gang und die gleichen Räder 7; 8 mit der Zahnkupplung Z3 zum 3. Gang sowie die Räder 12; 13 mit der Zahnkupplung Z2 zum 4 Gang. Die Schaltlogik sieht vor, daß im 0. Gang die Lamellenkupplung L1, im 1. und 3. Gang die Lamellenkupplung L2 und im 2. und 4. Gang die Lamellenkupplung L3 geschlossen ist. Das Anfahren erfolgt hydrostatisch-mechanisch mit der Welle C. Der Vorteil dieses Getriebekonzeptes gegenüber den anderen besteht darin, daß bei gleich großen Verdrängermaschinen ein erhöhtes Anfahrdrehmoment zur Verfügung steht.

## Patentansprüche

1. Hydrostatisch-mechanisches Lastschaltgetriebe
bestehend aus einem mehrwelligen Zahnräder-Planetengetriebe, einem stufenlos einstellbaren hydrostatischen Getriebe mit einer volumenverstellbaren Verdrängermaschine a und einer volumenkonstanten Verdrängermaschine b sowie Zahnräder-Nachschaltstufen und Schalt-Zahnkupplungen,
wobei bei dem Planetengetriebe eine Welle die Antriebswelle 1 bildet, an die die Verdrängermaschine a angeschlossen ist, eine zweite Welle die Welle B darstellt, mit der die Verdrängermaschine b in Verbindung steht, und zwei weitere Wellen als Koppelwellen A und E fungieren,
die sich so verhalten, daß sie in einer Extremstellung des hydrostatischen Getriebes gleiche Drehzahlen aufweisen und daß sie beim Verstellen des hydrostatischen Getriebes in die andere Extremlage ihre Drehzahlen so ändern, daß die Koppelwelle A stetig schneller und die Koppelwelle E stetig langsamer wird,
wobei jede Koppelwelle durch den Anschluß von Nachschaltstufen mindestens zwei an die Abtriebswelle 2 anschließbare Gänge realisiert,
wobei ein Gangwechsel mit einem Wechsel der Koppelwelle verbunden ist,
wobei benachbarte Nachschaltstufen die gleiche Übersetzung aufweisen
und wobei schließlich alle Nachschaltstufen bei synchronen Drehzahlen, lastfrei und ohne Zugkraftunterbrechung geschaltet werden,
dadurch gekennzeichnet,
daß von dem mehrwelligen Planetengetriebe das Hohlrad einer ersten Planetenstufe I und einer zweiten Planetenstufe II sowie der Planetenradträger einer dritten Planetenstufe III die Antriebswelle 1 darstellen, das Sonnenrad der Planetenstufe I mit der Welle B in Verbindung steht und ferner das Sonnenrad der Planetenstufe II eine Anfahrwelle C, das Hohlrad der Planetenstufe III die schnellaufende Koppelwelle A für den 1. und 3. Gang und der Planetenradträger der Planetenstufen I und II die langsamlaufende Koppelwelle E für den 2. und 4. Gang bilden, wobei für den Anfahrgang und 1. Gang dieselbe Nachschaltstufe und ferner für den 2. und 3. Gang dieselbe Nachschaltstufe benutzt werden.
